# EUROPÄISCHE PATENTSCHRIFT

(11) **EP 3 089 340 B1**
(45) Veröffentlichungstag und Bekanntmachung des Hinweises auf die Patenterteilung: **14.03.2018**
(21) Anmeldenummer: 16152516.7
(22) Anmeldetag: 25.01.2016
(51) Int. Cl.: H02M 1/36, H02J 7/34

(54) **SCHALTNETZTEIL ZUR VERSORGUNG EINES UMRICHTERS**
SWITCHING POWER SUPPLY FOR SUPPLYING A CONVERTER
ÉLEMENT D'UN RESEAU DE DISTRIBUTION DESTINE A ALIMENTER UN CONVERTISSEUR

(30) Priorität: 23.04.2015 DE 102015207454
(43) Veröffentlichungstag der Anmeldung: 02.11.2016
(73) Patentinhaber: Dr. Johannes Heidenhain GmbH, 83301 Traunreut (DE)
(72) Erfinder: HEINRICH, Simon, 83278 Traunstein (DE); von LE SUIRE, Christian, 83339 Chieming (DE)

(56) Entgegenhaltungen:
- EP-A2- 2 264 884
- CN-A- 104 410 303
- JP-A- H01 110 060
- US-A1- 2011 234 184
- US-B1- 8 629 631

## Beschreibung

### GEBIET DER TECHNIK

Die vorliegende Erfindung betrifft ein Schaltnetzteil zur Versorgung eines Umrichters, insbesondere eine Anlaufschaltung für ein solches Schaltnetzteil. Solche Anlaufschaltungen dienen dazu, nach dem Einschalten eines Umrichters ein zur Versorgung des Umrichters mit einer Betriebsspannung von beispielsweise 24V verwendetes Schaltnetzteil in Betrieb nehmen zu können. Das Schaltnetzteil benötigt wie der Umrichter selbst eine im Vergleich zur Netzspannung niedrige Betriebsspannung, um eine zur Ansteuerung von Halbleiterschaltelementen dienende Steuereinrichtung betreiben zu können. Diese Betriebsspannung muss auch nach dem Anlaufen in allen Betriebszuständen des Umrichters und des Schaltnetzteils aufrecht erhalten werden.

### STAND DER TECHNIK

Umrichter dienen beispielsweise zur Bereitstellung eines Wechselstromes zur Ansteuerung von Elektromotoren. Hierbei wird Wechselspannung konstanter Frequenz eines mehrphasigen Versorgungsnetzes mit einem Gleichrichter in eine Gleichspannung umgewandelt, um einen Zwischenkreiskondensator zu laden. Die Gleichspannung dieses Zwischenkreises wird dann mittels eines Wechselrichters in eine Wechselspannung beliebiger Frequenz und Phase umgewandelt, um einen Elektromotor passend anzusteuern. Der Umrichter eines Elektromotors entnimmt dem speisenden Netz Energie, die letztlich dem Elektromotor zugeführt und dort in Bewegungsenergie umgesetzt wird.

Zum Betrieb des Umrichters wird eine Versorgungsspannung von beispielsweise 24V benötigt, mit der die Steuereinrichtung zur Ansteuerung der Halbleiterschalter des Umrichters mittels Pulsweitenmodulation (PWM) versorgt wird. Diese Versorgungsspannung wird üblicherweise mittels eines Schaltnetzteiles ebenfalls aus dem Zwischenkreis des Umrichters gewonnen.

Schaltnetzteile sind ähnlich einem Umrichter aufgebaut, und richten zunächst die Netzspannung gleich, um einen Zwischenkreis zu laden. Mittels Halbleiterschalter wird diese Gleichspannung zu einer Wechselspannung umgewandelt, deren Frequenz deutlich höher (15 - 300 kHz) als die der Netzspannung (50 - 60 Hz) liegt. Erst diese höher getaktete Wechselspannung wird einem Transformator zugeführt, der an seinem Ausgang eine passende Spannung liefert, die dann wieder gleichgerichtet zum Betrieb des Umrichters zur Verfügung steht.

Der Vorteil von Schaltnetzteilen besteht darin, dass die Transformation von Wechselspannung bei höheren Frequenzen mit einem deutlich besseren Wirkungsgrad stattfindet. Auf einen schweren Eisenkern wie in herkömmlichen Netzteilen kann verzichtet werden.

Schaltnetzteile, die gemäß der bekannten Three-Level-Phase-Shift-Topologie aufgebaut sind (siehe z.B. G. Kácsor, P. Špánik, J. Dudrík, M. Luft, E. Szychta, Principles of Operation of Three-level Phase Shift controlled Converter, Electronics and Electrical Engineering, 2008. No. 2(82)) weisen vier Halbleiterschaltelemente zum getakteten Anlegen einer aus einer Netzwechselspannung gewonnenen Gleichspannung an eine Primärwicklung eines Transformators auf.

Wie der Umrichter benötigt aber auch das Schaltnetzteil eine Stromversorgung, um dessen Halbleiterschaltelemente ansteuern zu können. Unmittelbar nach dem Einschalten des Umrichters kann das Schaltnetzteil keine Spannung liefern, da es seine Halbleiterschalter noch nicht betreiben kann.

Aus der EP 0494327 B1 ist eine Anlaufschaltung bekannt, die nach dem Einschalten eines Schaltnetzteils eine Versorgungsspannung für das Schaltnetzteil liefert, um es in Betrieb zu nehmen. Die Anlaufschaltung weist eine kapazitive und ein ohmsche Einrichtung auf, die miteinander verbunden sind. Die kapazitive Einrichtung wird über die ohmsche Einrichtung aus einer gleichgerichteten Netzwechselspannung geladen, bis eine Steuereinrichtung aus der über der kapazitiven Einrichtung liegenden Spannung versorgt werden kann.

Aus der US 8629631 B1 ist eine Anlaufschaltung bekannt, bei der zur Beschleunigung des Einschaltvorganges einer Leuchtdiode eine Konstantstromquelle zum Aufladen eines Kondensators verwendet wird. Dies beschleunigt den Einschaltvorgang vor allem dann wenn die LED in einem abgedunkelten Zustand mit reduzierter Betriebsspannung eingeschaltet werden soll.

Aus der CN 104410303 A ist eine Ladeschaltung für einen Kondensator bekannt, bei der der Ladestrom für den Kondensator abhängig von der Versorgungsspannung eingestellt wird.

Aus der DE 102008032316 A1, welche den nächstliegenden Stand der Technik darstellt, ist eine Anlaufschaltung für die Stromversorgung für die Steuerelektronik eines Umrichters bekannt, bei der ein Kondensator über einen Widerstand aus dem Zwischenkreis geladen wird. Nach einer gewissen Zeit liegt dann über dem Kondensator eine Spannung, die zur Inbetriebnahme einer PWM - Steuereinrichtung ausreicht. Hat das Schaltnetzteil seinen Betrieb aufgenommen, wird die Steuereinrichtung über eine Eigenversorgungswicklung des Schaltnetzteils gespeist. Es wird in diesem Dokument auch das Problem angesprochen, dass die Anlaufschwelle solcher Schaltungen aufgrund von Herstellungstoleranzen üblicher PWM - Steuereinrichtungen und des damit verbundenen streuenden Leckstromes nicht präzise definiert ist. Diesem Problem wird dort mit einem zusätzlichen Schalelement abgeholfen, das für eine definierte Schalthysterese in Abhängigkeit der anliegenden Eingangsspannung sorgt.

Beim Betrieb von Umrichtern mit einem stark schwankenden Leistungsbedarf, so wie es beispielsweise bei deren Verwendung an mehrachsigen Werkzeugmaschinen vorkommt, oder auch im Falle einer schwankenden Netzspannung, ist es wichtig, dass das Schaltnetzteil zur Versorgung des Umrichters in allen Betriebszuständen eine ausreichende Versorgungsspannung liefern kann. Beim plötzlichen Abruf hoher Leistung aus dem gemeinsamen Zwischenkreis von Umrichter und Schaltnetzteil ist dies in herkömmlichen Umrichtern nicht immer gewährleistet.

### ZUSAMMENFASSUNG DER ERFINDUNG

Es ist Aufgabe der Erfindung, ein Schaltnetzteil eines Umrichters weiter zu verbessern. Dabei soll trotz einer erheblichen Serienstreuung bezüglich der Stromaufnahme einer Steuerschaltung des Schaltnetzteils ein definiertes Verhalten bei der Inbetriebnahme des Schaltnetzteils und damit des Umrichters gewährleistet werden.

Diese Aufgabe wird gelöst durch eine Vorrichtung gemäß Anspruch 1. Vorteilhafte Details dieser Vorrichtung ergeben sich auch aus den von Anspruch 1 abhängigen Ansprüchen.

Es wird ein Schaltnetzteil zur Versorgung eines Umrichters mit einer Betriebsspannung beschrieben, mit einem Versorgungskondensator, über den eine Steuereinrichtung zur Erzeugung von Steuersignalen für Halbleiterschalter des Schaltnetzteils mit Spannung versorgt wird. Der Versorgungskondensator wird hierzu über eine Anlaufschaltung aus einem Zwischenkreis des Umrichters aufgeladen. Die Anlaufschaltung umfasst einen Stromregler, durch den ein Gesamtstrom vom Zwischenkreis zur Anlaufschaltung beeinflussbar ist.

Der Stromregler hält den Gesamtstrom konstant, wobei ein den Gesamtstrom beeinflussendes Ventil des Stromreglers nur auf einen ersten Teilstrom wirkt, der zusammen mit einem zweiten Teilstrom den Gesamtstrom ergibt. Der zweite Teilstrom umfasst dabei einen Leckstrom der Steuereinrichtung und einen Ladestrom des Versorgungskondensators.

Es wird so mittels der Stromregelung sichergestellt, dass das Schaltnetzteil immer bei demselben Wert der gleichgerichteten Netzspannung einschaltet.

Diese Einschaltschwelle liegt nun bei einer definierten Zwischenkreisspannung und ist unabhängig vom Leckstrom der Steuereinrichtung. Ist der Leckstrom der Steuereinrichtung groß, wird der Strom durch die parallel zu Steuereinrichtung und Gatetreiber angeschlossene Stromregelung klein, und umgekehrt. Der zum Anlaufen des Schaltnetzteiles benötigte Spannungswert des Versorgungskondensators der Steuereinrichtung wird so bei jeweils demselben Wert der gleichgerichteten Netzeingangsspannung bzw. Zwischenkreisspannung erreicht.

Zudem werden die Steuereinrichtung und die Gatetreiber zur Ansteuerung der Halbleiterschalter über zwei hochohmige Widerstandsketten an das obere bzw. untere Potential der gleichgerichteten Netzspannung des Zwischenkreises angeschlossen. Damit liegt das Bezugspotential der Steuereinrichtung und der Gatetreiber auf dem Mittenpotential der beiden am Brückengleichrichter über einen Ladewiderstand angeschlossenen Zwischenkreiskondensatoren, ist aber dennoch von der Netzspannung durch die Schutzimpedanz der Widerstandsketten sicher getrennt. Ein Anlaufen des Schaltnetzteiles ist damit zum einen auch bei eingangsseitigem Anschluss an einem nicht im Sternpunkt geerdeten Trenntransformator gewährleistet, zum anderen kann die Steuereinrichtung während des Betriebes über eine Diode mit den Ausgangskondensatoren des Schaltnetzteiles verbunden werden. Damit ist unter allen Bedingungen ein Betrieb des Schaltnetzteiles zu gewährleisten.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: den Primärteil eines Schaltnetzteils,
- Figur 2: den Sekundärteil des Schaltnetzteils,
- Figur 3: eine Anlaufschaltung für das Schaltnetzteil,

### BESCHREIBUNG DER AUSFÜHRUNGSFORMEN

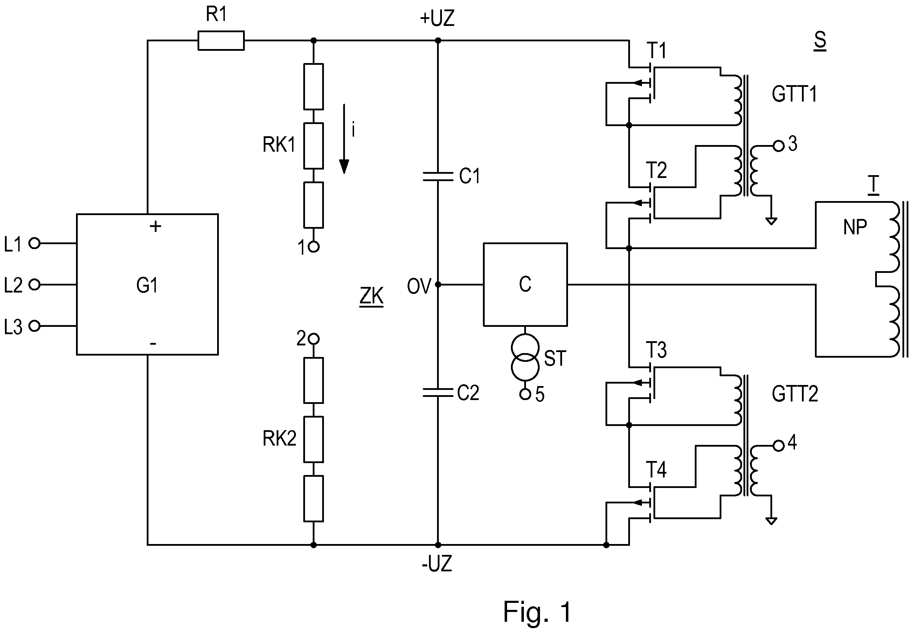

Die Figur 1 zeigt den Primärteil eines Schaltnetzteiles S mit einer Three-Level-Phase-Shift-Topologie. Die über einen hier nicht dargestellten Trenntransformator zugeführten drei Phasen L1, L2, L3 eines speisenden Netzes werden in einem ersten Gleichrichter G1 gleichgerichtet. Über einen Widerstand R1 wird ein Zwischenkreis ZK aus zwei in Reihe zwischen das positive und negative Potential +UZ, -UZ der Gleichspannung geschalteten Kondensatoren C1, C2 geladen. Die Zwischenkreiskondensatoren C1, C2 mit einer Kapazität von je 690µF glätten die vom Gleichrichter G1 erzeugte Gleichspannung, und stellen ein mittleres, zwischen dem oberen und unteren Potential +UZ, -UZ der Gleichspannung liegendes Potential 0V zur Verfügung. Bei einer verketteten Spannung zwischen den drei Netzphasen L1, L2, L3 von z.B. 400V beträgt die Potentialdifferenz nach der Gleichrichtung ca. 560V, das obere bzw. untere Potential des Zwischenkreises ZK liegt damit bei +280V bzw. -280V bezogen auf das mittlere Potential von 0V.

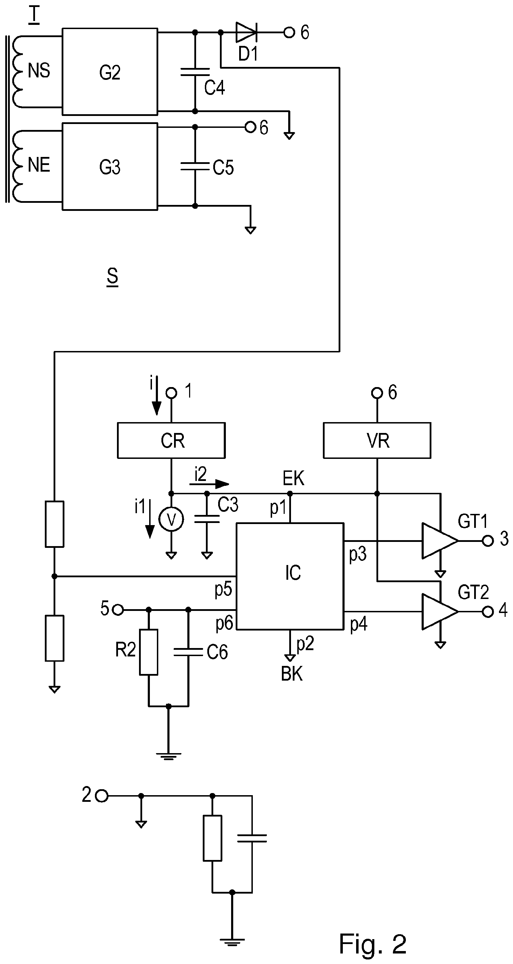

Über jeweils zwei in Reihe geschaltete Halbleiterschalter T1, T2 bzw. T3, T4 ist ein erster Anschluss einer Primärwicklung NP des Transformators T des Schaltnetzteiles S wechselweise mit dem positiven oder negativen Potential +UZ, -UZ des Zwischenkreises ZK verbunden, so dass an diesem Anschluss eine Rechteckspannung anliegt, die zwischen -280V und 280V springt. Der zweite Anschluss der Primärwicklung NP ist mit dem mittleren Potential 0V zwischen den beiden Zwischenkreiskondensatoren C1, C2 verbunden. Der in der Primärwicklung NP fließenden Strom wird mittels einer Strommesseinheit C erfasst und dessen Wert über einen Strommesstransformator ST einer Folgeelektronik zur Verfügung gestellt (über Anschluss 5, siehe auch Figur 2).

Die Halbleiterschalter T1, T2, T3, T4 werden über Gatetreiber-Transformatoren GTT1, GTT2 angesteuert. Hierdurch sind die mit hohen Spannungen beaufschlagten Halbeiterschaltelemente T1, T2, T3, T4 galvanisch von der sekundärseitig angeordneten Ansteuerschaltung getrennt, die pulsbreitenmodulierte Signale (PWM - Signale) zu deren Ansteuerung liefert (über Anschlüsse 3 und 4).

Über zwei mit dem oberen bzw. unteren Potential +UZ, -UZ des Zwischenkreises ZK verbundene hochohmige Widerstandsketten RK1, RK2 wird (über Anschlüsse 1 und 2) eine berührbare Spannung für die sekundärseitig angeordnete Anlaufschaltung des Schaltnetzteiles zur Verfügung gestellt. Jede Widerstandskette RK1, RK2 hat einen Gesamtwiderstand von 450k, so dass der für eine berührbare Spannung zulässige Strom von 3,5mA nicht überschritten wird. Dies gilt dank der Aufteilung dieses Gesamtwiderstandes auf mehrere einzelne Widerstände in einer der Widerstandsketten RK1, RK2 auch dann, wenn einer der einzelnen Widerstände defekt und beispielsweise niederohmig wird.

Der Sekundärteil des Schaltnetzteils ist in der Figur 2 dargestellt, die zusammen mit der Figur 1 zu betrachten ist. An den mit den Ziffern 1 - 5 gekennzeichneten Anschlüssen sind die beiden Teilschaltungen elektrisch miteinander verbunden. Man erkennt eine Sekundärwicklung NS, die der Primärwicklung NP gegenüber liegt, so dass von der Sekundärwicklung NS nach einer Gleichrichtung mittels zweitem Gleichrichter G2 die zum Betrieb eines Umrichters nötige Gleichspannung von beispielsweise 24V geliefert wird. Diese Gleichspannung wird mit einem ersten Pufferkondensator Kondensator C4 geglättet und gepuffert.

Zusätzlich ist der Primärwicklung NP gegenüber liegend eine Eigenversorgungswicklung NE angeordnet, die im Betrieb zur Versorgung des Schaltnetzteils S dient.

Eine Steuereinrichtung IC dient zur Ansteuerung von zwei Gatetreibern GT1 und GT2, über die die beiden Gatetreiber-Transformatoren GTT1 und GTT2, und damit letztlich die Halbleiterschalter T1, T2, T3, T4 angesteuert werden. Die Steuereinrichtung IC ist als integrierte Schaltung ausgebildet, sie erzeugt die für die pulsbreitenmodulierte Ansteuerung der Halbleiterschalter T1, T2, T3, T4 nötigen Rechtecksignale.

Die Steuereinrichtung IC weist folgende Anschluss-Pins auf: Am Pin p1 liegt die Versorgungsspannung für die Steuereinrichtung an, am Pin p2 das Bezugspotential. Typischerweise schalten sich solche Steuereinrichtungen IC ein, sobald zwischen der Eingangsklemme EK und der Bezugspotentialklemme BK eine Spannung von 12V anliegt.

Die Pins p3 und p4 dienen der Ansteuerung der Gatetreiber GT1, GT2. Der Pin p5 dient der Messung der Ausgangsspannung des Schaltnetzteils S, die mittels eines Spannungsteilers vom Ausgang des Schaltnetzteils S abgegriffen wird. Am Pin p6 liegt schließlich der gemessene Wert des Stromes in der Primärspule NP an.

Über die Anschlüsse p1, p2 ausreichend mit Spannung versorgt, errechnet die Steuereinrichtung IC also anhand der Informationen über die Ausgangsspannung des Schaltnetzteils S und den Strom in der Primärspule NP geeignete Ansteuersignale (PWM - Muster) für die Gatetreiber GT1, GT2.

Bevor diese Steuereinrichtung IC und die Gatetreiber GT1, GT2 arbeiten können, müssen diese Elemente von einer Anlaufschaltung mit der nötigen Versorgungsspannung versorgt werden. Sie weisen hierzu je eine Eingangsklemme EK für die Zufuhr der Versorgungsspannung und eine Bezugspotentialklemme BK für ein Bezugspotential auf, das in den Figuren auch mit einem Dreieck gekennzeichnet ist.

Ein Versorgungskondensator C3 mit einer Kapazität von 230µF ist ein zentrales Element der Anlaufschaltung. Dieser Kondensator C3 ist zwischen die Eingangsklemme EK und die Bezugspotentialklemme BK geschaltet. Die über dem Versorgungskondensator C3 liegende Spannung entspricht also der der Steuereinrichtung IC und den Gatetreibern GT1, GT2 zur Verfügung stehenden Versorgungsspannung.

Die Anlaufschaltung lädt den Versorgungskondensator C3 aus dem Zwischenkreis ZK. Hierzu ist das obere Potential +UZ des Zwischenkreises ZK über die erste hochohmige Widerstandskette RK1 mit der Eingangsklemme EK verbunden, wobei in der Zuleitung noch ein Stromregler CR liegt. Die Bezugspotentialklemme BK ist über die zweite Widerstandskette RK2 mit dem unteren Potential -UZ des Zwischenkreises ZK verbunden. Damit liegt das Bezugspotential der Steuereinrichtung IC und der Gatetreiber GT1, GT2 auf dem Mittenpotential 0V der beiden am Brückengleichrichter G1 über den Ladewiderstand R1 angeschlossenen Zwischenkreiskondensatoren C1, C2, ist aber dennoch von der Netzspannung durch die Schutzimpedanz der Widerstandsketten RK1, RK2 sicher getrennt.

Der über die erste Widerstandskette RK1 zur Anlaufschaltung fließende Gesamtstrom i wird vom Stromregler CR auf einen festen Wert eingestellt. Dieser Gesamtstrom i teilt sich in einen ersten Teilstrom i1 und einen zweiten Teilstrom i2 auf. Im Pfad vom ersten Teilstrom i1 sitzt das Ventil V, das vom Stromregler CR beeinflusst wird, um den Gesamtstrom i konstant zu halten, während der zweite Teilstrom i2 einerseits den Versorgungskondensator C3 lädt, aber auch den Leckstrom zur Steuereinrichtung IC umfasst. Ohne diese speziellen Maßnahmen in der Anlaufschaltung würde die erhebliche Streuung dieses Leckstromes dazu führen, dass sich jeweils gleich aufgebaute Schaltnetzteile bei der Inbetriebnahme sehr unterschiedlich verhalten, weil die Einschaltschwelle von Gerät zu Gerät anders ausfallen würde. Dank des Stromreglers CR, der den Gesamtstrom i und damit den Spannungsabfall über den Widerstandsketten RK1, RK2 unabhängig von diesem Leckstrom konstant hält (indem er das Ventil V ansteuert, das den ersten Teilstrom i1 direkt zum Bezugspotential einstellt), kann eine definierte Anlaufschwelle für alle Schaltnetzteile S erreicht werden. Der Einfluss der fertigungsbedingten Streuung des Leckstromes der Steuereinrichtung IC wird so eliminiert. Ein konkretes Ausführungsbeispiel für einen Stromregler CR und ein Ventil V wird weiter unten beschrieben.

Um nach der Inbetriebnahme der Steuereinrichtung IC mittels der Anlaufschaltung auch während des Betriebs des Umrichters die Steuereinrichtung IC in allen Zuständen jederzeit sicher mit ausreichend Energie versorgen zu können, wird die Versorgung der Steuereinrichtung IC und der Gatetreiber GT1, GT2 nun vom Schaltnetzteil S selbst erledigt, wie im Folgenden näher beschrieben wird.

Erreicht nach dem Anlegen der Netzspannung in den Phasen L1, L2, L3 des speisenden Netzes die Spannung im Zwischenkreis ZK einen Wert von 400V, wird nach einer gewissen Zeit die Ladung am Kondensator C3 und damit die zwischen der Eingangsklemme EK und der Bezugspotentialklemme BK anliegende Versorgungsspannung groß genug, um die Steuereinrichtung IC und die Gatetreiber GT1, GT2 zu betreiben. Die Halbleiterschalter T1, T2, T3 und T4 können nun pulsbreitenmoduliert angesteuert werden, der Transformator T des Schaltnetzteils S kann in Betrieb genommen werden.

Sobald die Steuereinrichtung IC und die Gatetreiber GT1, GT2 ihren Betrieb aufnehmen können, werden die Transistoren T1, T2, T3, T4 getaktet. Sowohl in der Sekundärwicklung NS als auch in der Eigenversorgungswicklung NE wird nun eine Wechselspannung induziert.

Die Wechselspannung der Sekundärwicklung NP wird mit einem zweiten Gleichrichter G2 gleichgerichtet. Die dabei entstehende Gleichspannung wird vom ersten Pufferkondensator C4 geglättet und über eine Diode D1 einem Spannungsregler VR zugeführt. Dieser Spannungsregler VR gibt die zum Betrieb der Steuereinrichtung IC und der Gatetreiber GT1, GT2 benötigte Spannung an die Eingangsklemme EK ab.

Die Wechselspannung der Eigenversorgungswicklung NE wird mit einem dritten Gleichrichter G3 gleichgerichtet. Die dabei entstehende Gleichspannung wird von einem zweiten Pufferkondensator C5 geglättet, und ebenfalls dem Spannungsregler SR zugeführt, um eine zum Betrieb der Steuereinrichtung IC ausreichende Versorgungsspannung zur Verfügung zu stellen, noch bevor die Spannung am ersten Pufferkondensator C4 dazu ausreicht.

Der Kapazitätswert des Pufferkondensators C5 beträgt dabei 2µF, der Kapazitätswert des Pufferkondensators C4 liegt mit 10mF um mehr als drei Größenordnungen höher. Aus diesem Grund steigt die Spannung am Pufferkondensator C5 deutlich schneller an als am Pufferkondensator C4. Die Versorgung von der Steuereinrichtung IC und Gatetreiber GT1, GT2 wird damit nach dem ersten Anlauf des Schaltnetzteiles S sehr schnell vom Pufferkondensator C5 und dem nachgeschalteten Spannungsregler SR sichergestellt, noch bevor die Spannung am Pufferkondensator C4 ausreicht, um die Versorgung von Steuereinrichtung IC und Gatetreiber GT1, GT2 zu gewährleisten. Während dieser Zeit nach dem Anlaufen der Schaltung trennt die Diode D1 die beiden Pufferkondensatoren C4 und C5 voneinander.

Die zum Betrieb des Schaltnetzteiles S benötigte Leistung für die Steuereinrichtung IC und die Gatetreiber GT1, GT2 beträgt ca. 2 Watt. Wird der Ausgangsstrom des Schaltnetzteils S sprungartig reduziert, führt dies dazu, dass die Steuereinrichtung IC die Pulsbreite in der Primärwicklung NP des Transformators T verkleinert, um die Ausgangsspannung an C4 und damit auch die Spannung an Pin5 der Steuereinrichtung IC konstant zu halten. Der Pin5 der Steuereinrichtung IC ist ein invertierender Eingang eines Operationsverstärkers, der als PID-Regler beschaltet ist. Dieser dient der Regelung der Ausgangsspannung des Schaltnetzteils S. Aufgrund der stark unterschiedlichen Kapazitätswerte von C4 und C5 führt die reduzierte Pulsbreite dazu, dass die Spannung an C5 nicht mehr ausreicht, um die Versorgungsspannung aufrechtzuerhalten. In diesem Fall wird die Versorgung der Steuereinrichtung IC und der Gatetreiber GT1, GT2 über den Pufferkondensator C4, die Diode D1 und den Spannungsregler SR gewährleistet.

Die Steuereinrichtung IC wird also nach dem Anlaufen mit Hilfe der Anlaufschaltung zunächst aus dem Versorgungskondensator C3 bzw. aus der Eigenversorgungswicklung NE und damit aus dem zweiten Pufferkondensator C5 gespeist. Sobald dann die Sekundärwicklung NS den deutlich größeren zweiten Pufferkondensator C4 vollständig geladen hat, wird auch dessen Ausgangsspannung über D1 dem Spannungsregler VR zur Verfügung gestellt. Somit ist einerseits eine schnelle Eigenversorgung des Schaltnetzteils S sichergestellt, und andererseits eine stabile Pufferung für Betriebszustände, in denen der Transformator T nicht genügend Energie liefern kann, etwa weil die Zwischenkreisspannung kurzzeitig zurückgeht. Dies kann durch einen besonders hohen Energiebedarf der an den Umrichter angeschlossenen Motoren bewirkt werden, etwa wenn mehrere Achsen gleichzeitig stark beschleunigt werden müssen.

Im Falle eines von der Strommesseinheit C festgestellten Überstromergeignisses, das z.B. durch einen Kurzschluss oder eine Überlastung auf der 24V - Sekundärseite des Transformators T ausgelöst werden kann, schaltet die Steuereinrichtung IC die Ansteuersignale der vier Halbleiterschalter T1, T2, T3, T4 ab. Das Gleichtaktfilter R2, C6 (R2 = 688k, C6 = 100pF) filtert dabei die Störungen, die daraus resultieren, dass das Mittenpotential 0V der Kondensatoren C1 und C2 und das Bezugspotential der Steuereinrichtung IC und der Gatetreiber GT1, GT2 sicher getrennt sind. Ohne Gleichtaktfilter R2, C6 registrierte die Steuereinrichtung IC über Anschluss-Pin p6 bei Betrieb des Schaltnetzteiles S mit Three-Level-Phase-Shift-Topologie und geringer Ausgangslast ein Überstromereignis. Dies würde zur Abschaltung des Schaltnetzteiles S führen, ein Betrieb im eingeschwungenen Zustand wäre damit nicht möglich.

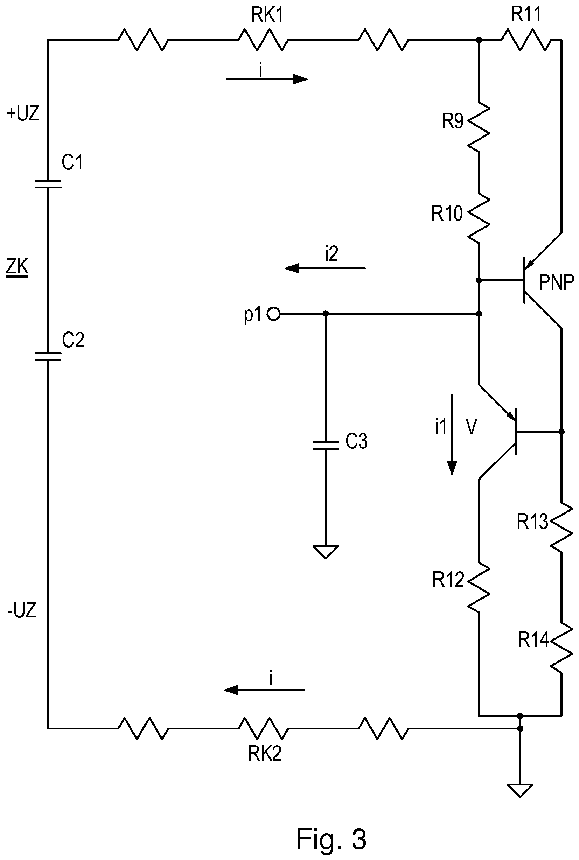

Im Folgenden soll anhand der Figur 3 ein Ausführungsbeispiel für eine Anlaufschaltung genauer beschrieben werden. Es ist der Zwischenkreis ZK mit seinen beiden Kondensatoren C1 und C2 dargestellt, sowie die beiden Widerstandsketten RK1 und RK2, durch die der Gesamtstrom i in die Anlaufschaltung fließt. Man erkennt auch den Kondensator C3, der an einem Anschluss mit der Eingangsklemme EK, am anderen Anschluss mit der Bezugspotentialklemme BK verbunden ist.

Bei einer Spannung von 400V im Zwischenkreis ZK fließt ein Gesamtstrom i von ca. 440µA über die Widerstandsketten RK1, RK2 in die Anlaufschaltung. Dieser Gesamtstrom i fließt ebenso über die Widerstände R9 und R10. Der stromabhängige Spannungsabfall über diese Widerstände R9, R10 wird dabei vom Bipolartransistor PNP gemessen und durch Variation der Spannung am Kollektor vom Bipolartransistor PNP konstant gehalten. Wird der Strom durch R9 und R10 nämlich kleiner, sinkt die Spannung am Kollektor vom Bipolartransistor PNP ab. Der als Ventil V wirkende Bipolartransistor wird dann stärker leitend, und der Strom durch die Widerstände R9, R10 und R12 nimmt wieder zu.

Entscheidend ist dabei, dass der Gesamtstrom i, der aus dem Zwischenkreis ZK über die Widerstandskette RK1 zur Anlaufschaltung fließt, als Ganzes gemessen und durch eine Regelung konstant gehalten wird, während das zur Regelung angesteuerte Ventil V nur den ersten Teilstrom i1 beeinflusst, der nicht zur Steuereinrichtung IC hin abfließt. Der zur Steuereinrichtung IC abfließende zweite Teilstrom i2 umfasst neben dem Ladestrom für den Versorgungskondensator C3 auch den Leckstrom dieser Steuereinrichtung IC, der durch die fertigungsbedingte Serienstreuung sehr unterschiedlich sein kann. Die Summe der beiden Teilströme i1 und i2 ergibt gerade den Gesamtstrom i. Der über R11, R13 und R14 fließende Strom ist dabei vernachlässigbar klein. Die Widerstandswerte der Schaltung nach Figur 3 sind: R9 = 4k64; R10 = 316r; R11 = 100k; R12 = 46k4; R13 = 464k und schließlich R14 = 464k.

Die Schaltung in Figur 3 ist so dimensioniert, dass bei einer Zwischenkreisspannung von 400V beim Einschaltvorgang der Steuereinrichtung ein erster Teilstrom i1 durch den Widerstand R12 fließt, dessen Wert zwischen 190µA und 290µA liegt. Der Leckstrom bzw. zweite Teilstrom i2 der Steuereinrichtung IC liegt dabei fertigungsbedingt streuend zwischen 250µA und 150µA. Der Summenstrom (Gesamtstrom i) der beiden Teilströme i1, i2 ist aber dank des Stromreglers CR konstant 440µA. Mit Hilfe dieser Stromregelung CR, deren Ventil V nur auf einen ersten Teilstrom i1 des gemessenen Gesamtstromes i wirkt, wird erreicht, dass die Spannung am Kondensator C3 unabhängig vom Leckstrom i2 der Steuereinrichtung IC immer in einem sehr engen Bereich der Zwischenkreisspannung ZK den zum Starten des Schaltnetzteiles S notwendigen Wert von mehr als 12V erreicht. Der negative Einfluss der Serienstreuung des Leckstromes der Steuereinrichtung IC wird somit beseitigt.

Zusammenfassend erhält man dank der speziellen Anlaufschaltung einen definierten Einschaltpunkt des Schaltnetzteiles S, unabhängig vom Leckstrom der im jeweiligen Gerät verbauten Ansteuerschaltung IC. Zudem stellt die spezielle, doppelt ausgelegte Versorgung des Schaltnetzteils S nach dem Anlaufen schnell eine gesicherte und in allen Betriebszuständen stabile Versorgung her.

## Patentansprüche

1. Schaltnetzteil zur Versorgung eines Umrichters mit einer Betriebsspannung, mit einem Versorgungskondensator (C3), über den eine Steuereinrichtung (IC) zur Erzeugung von Steuersignalen für Halbleiterschalter (T1, T2, T3, T4) des Schaltnetzteils (S) mit der Betriebsspannung versorgt ist, und der über eine Anlaufschaltung aus einem Zwischenkreis (ZK) des Umrichters aufladbar ist, **dadurch gekennzeichnet, dass** die Anlaufschaltung einen Stromregler (CR) umfasst, durch den ein Gesamtstrom (i) vom Zwischenkreis (ZK) zur Anlaufschaltung beeinflussbar ist, und dass der Stromregler (CR) den Gesamtstrom (i) konstant hält, wobei ein den Gesamtstrom (i) beeinflussendes Ventil (V) des Stromreglers (CR) nur auf einen ersten Teilstrom (i1) wirkt, der zusammen mit einem zweiten Teilstrom (i2) den Gesamtstrom (i) ergibt, und wobei der zweite Teilstrom (i2) einen Leckstrom der Steuereinrichtung (IC) und einen Ladestrom des Versorgungskondensators (C3) umfasst.

2. Schaltnetzteil nach Anspruch 1, **dadurch gekennzeichnet, dass** das Schaltnetzteil (S) im Zwischenkreis (ZK) zwei in Reihe geschaltete Zwischenkreiskondensatoren (C1, C2) aufweist, die ein mittleres Potential (0V) zwischen einem oberen und einem unteren Potential (+UZ, -UZ) des Zwischenkreises (ZK) bilden, und dass der Versorgungskondensator (C3) mit je einem seiner beiden Anschlüsse über je eine hochohmige Widerstandskette (RK1, RK2) mit dem oberen bzw. unteren Potential (+UZ, -UZ) des Zwischenkreises (ZK) verbunden ist, so dass die Anlaufschaltung und die Steuereinrichtung (IC) auf dem mittleren Potential (0V) liegen.

3. Schaltnetzteil nach Anspruch 2, **dadurch gekennzeichnet, dass** die Steuereinrichtung (IC) mittels Gatetreiber-Transformatoren (GTT1, GTT2) galvanisch von den Halbleiterschaltern (T1, T2, T3, T4) getrennt ist.

4. Schaltnetzteil nach Anspruch 2 oder 3, **dadurch gekennzeichnet, dass** ein erster Anschluss einer Primärwicklung (NP) mit dem mittleren Potential (0V) verbunden ist, und ein zweiter Anschluss der Primärwicklung (NP) mittels der Halbleiterschalter (T1, T2, T3, T4) zwischen dem oberen und unteren Potential (+UZ, -UZ) des Zwischenkreises (ZK) umschaltbar ist.

5. Schaltnetzteil nach einem der vorhergehenden Ansprüche, **dadurch gekennzeichnet, dass** das Schaltnetzteil (S) sekundärseitig eine Sekundärwicklung (NS) und eine Eigenversorgungswicklung (NE) aufweist, deren gleichgerichtete Ausgangsspannung jeweils von einem ersten bzw. zweiten Pufferkondensator (C4, C5) gepuffert und einem Spannungsregler (VR) zugeführt ist, über den die Steuereinrichtung (IC) im laufenden Betrieb des Schaltnetzteils (S) mit der Betriebsspannung versorgbar ist.

6. Schaltnetzteil nach Anspruch 5, **dadurch gekennzeichnet, dass** der erste Pufferkondensator (C4) der Sekundärwicklung (NS) eine um wenigstens einen Faktor Tausend höhere Kapazität aufweist als der zweite Pufferkondensator (C5) der Eigenversorgungswicklung (NE).

7. Schaltnetzteil nach Anspruch 6, **dadurch gekennzeichnet, dass** der erste Pufferkondensator (C4) vom zweiten Pufferkondensator (C5) durch eine Diode (D1) getrennt ist.

## Claims

1. Switched-mode power supply for supplying a converter with an operating voltage, comprising a supply capacitor (C3), via which a control device (IC) for generating control signals for semiconductor switches (T1, T2, T3, T3) of the switched-mode power supply (S) is supplied with the operating voltage, and which is chargeable via a start-up circuit from a link circuit (ZK) of the converter, **characterized in that** the start-up circuit comprises a current regulator (CR), by which a total current (i) from the link circuit (ZK) to the start-up circuit is able to be influenced, and **in that** the current regulator (CR) keeps the total current (i) constant, wherein a valve (V) of the current regulator (CR), which valve influences the total current (i), acts only on a first partial current (i1), which together with a second partial current (i2) produces the total current (i), and wherein the second partial current (i2) comprises a leakage current of the control device (IC) and a charging current of the supply capacitor (C3).

2. Switched-mode power supply according to Claim 1, **characterized in that** the switched-mode power supply (S) comprises in the link circuit (ZK) two series-connected link circuit capacitors (C1, C2), which form an average potential (0V) between an upper and a lower potential (+UZ, -UZ) of the link circuit (ZK), and **in that** the supply capacitor (C3) is connected by a respective one of its two terminals, via a respective thigh-resistance resistor chain (RK1, RK2), to the upper and power potentials (+UZ, -UZ), respectively, of the link circuit (BK), such that the start-up circuit and the control device (IC) are at the average potential (0V).

3. Switched-mode power supply according to Claim 2, **characterized in that** the control device (IC) is galvanically isolated from the semiconductor switches (T1, T2, T3, T4) by means of gate driver transformers (GTT1, GTT2).

4. Switched-mode power supply according to Claim 2 or 3, **characterized in that** a first terminal of a primary winding (NP) is connected to the average potential (0V), and a second terminal of the primary winding (NP) is switchable between the upper and lower potentials (+UZ, -UZ) of the link circuit (ZK) by means of the semiconductor switches (T1, T2, T3, T4).

5. Switched-mode power supply according to any of the preceding claims, **characterized in that** the switched-mode power supply (S) comprises on the secondary side a secondary winding (NS) and an inherent supply winding (NE), the rectified output voltage of which is buffered respectively by a first and second buffer capacitor (C4, C5) and fed to a voltage regulator (VR), via which the control device (IC) is able to be supplied with the operating voltage in the course of operation of the switched-mode power supply (S).

6. Switched-mode power supply according to Claim 5, **characterized in that** the first buffer capacitor (C4) of the secondary winding (NS) has a capacitance that is higher than that of the second buffer capacitor (C5) of the inherent supply winding (NE) by at least a factor of a thousand.

7. Switched-mode power supply according to Claim 6, **characterized in that** the first buffer capacitor (C4) is isolated from the second buffer capacitor (C5) by a diode (D1).

## Revendications

1. Bloc d'alimentation à découpage destiné à alimenter un onduleur avec une tension de fonctionnement, comportant un condensateur d'alimentation (C3) par l'intermédiaire duquel un dispositif de commande (IC) destiné à générer des signaux de commande pour des commutateurs à semi-conducteurs (T1, T2, T3, T4) du bloc d'alimentation à découpage (S) est alimenté avec la tension de fonctionnement, et qui peut être chargé par l'intermédiaire d'un circuit de démarrage constitué d'un circuit intermédiaire (ZK) de l'onduleur, **caractérisé en ce que** le circuit de démarrage comprend un régulateur de courant (CR) pouvant agir sur un courant total (i) allant du circuit intermédiaire (ZK) au circuit de démarrage, et **en ce que** le régulateur de courant (CR) maintient constant le courant total (i), dans lequel une soupape (V) du régulateur de courant (CR) agissant sur le courant total (i) n'agit que sur un premier courant partiel (i1) qui, conjointement avec un second courant partiel (i2), produit le courant total (i), et dans lequel le second courant partiel (i2) comprend un courant de fuite du dispositif de commande (IC) et un courant de charge du condensateur d'alimentation (C3).

2. Bloc d'alimentation à découpage selon la revendication 1, **caractérisé en ce que** le bloc d'alimentation à découpage (S) comporte deux condensateurs de circuit intermédiaire (C1, C2) connectés en série dans le circuit intermédiaire (ZK), qui établissent un potentiel moyen (OV) entre un potentiel supérieur et un potentiel inférieur (+UZ, -UZ) du circuit intermédiaire (ZK), et **en ce que** le condensateur d'alimentation (C3) est respectivement relié par chacune de ses deux bornes au potentiel supérieur et au potentiel inférieur (+UZ, -UZ) du circuit intermédiaire (ZK) par l'intermédiaire d'une chaîne de résistances de forte valeur, de manière à ce que le circuit de démarrage et le dispositif de commande (IC) se situent au potentiel moyen (OV).

3. Bloc d'alimentation à découpage selon la revendication 2, **caractérisé en ce que** le dispositif de commande (IC) est séparé de manière galvanique des commutateurs à semi-conducteurs (T1, T2, T3, T4) au moyen de transformateurs d'attaque de grille (GTT1, GTT2).

4. Bloc d'alimentation à découpage selon la revendication 2 ou 3, **caractérisé en ce qu'**une première borne d'un enroulement primaire est reliée au potentiel moyen (OV) et **en ce qu'**une seconde borne de l'enroulement primaire (NP) peut être amenée à basculer entre le potentiel supérieur et le potentiel inférieur (+UZ, -UZ) du circuit intermédiaire (ZK) au moyen des commutateurs semi-conducteurs (T1, T2, T3, T4).

5. Bloc d'alimentation à découpage selon l'une quelconque des revendications précédentes, **caractérisé en ce que** le bloc d'alimentation à découpage (S) comporte côté secondaire un enroulement secondaire (NS) et un enroulement d'auto-alimentation (NE), dont la tension de sortie redressée est respectivement tamponnée par un premier ou un second condensateur tampon (C4, C5) et est délivrée à un régulateur de tension (VR) par l'intermédiaire duquel le dispositif de commande (IC) peut être alimenté en tension de fonctionnement pendant le fonctionnement du bloc d'alimentation à découpage (S).

6. Bloc d'alimentation à découpage selon la revendication 5, **caractérisé en ce que** le premier condensateur tampon (C4) de l'enroulement secondaire (NS). a une capacité qui est supérieure d'au moins un facteur mille à celle du second condensateur tampon (C5) de l'enroulement d'auto-alimentation (NE).

7. Bloc d'alimentation à découpage selon la revendication 6, **caractérisé en ce que** le premier condensateur tampon (C4) est séparé du second condensateur tampon (C5) par une diode (D1).
